Europäisches Patentamt

(19) European Patent Office

Office européen des brevets

(11) Numéro de publication : **0 186 565**
**B1**

(12) **FASCICULE DE BREVET EUROPÉEN**

(45) Date de publication du fascicule du brevet :
09.08.89

(51) Int. Cl.⁴ : **B 64 C 25/58**, B 60 G 15/12

(21) Numéro de dépôt : **85402418.9**

(22) Date de dépôt : **04.12.85**

(54) **Elément de suspension hydropneumatique d'un véhicule lourd ou du train d'atterrissage d'un aéronef.**

(30) Priorité : **12.12.84 FR 8419015**

(43) Date de publication de la demande :
**02.07.86 Bulletin 86/27**

(45) Mention de la délivrance du brevet :
**09.08.89 Bulletin 89/32**

(84) Etats contractants désignés :
**CH DE GB IT LI**

(56) Documents cités :
**EP-A- 0 045 269**
**EP-A- 0 122 731**
**FR-A- 2 195 537**
**FR-A- 2 389 046**
**GB-A- 1 013 821**

(73) Titulaire : **S.A.M.M.- Société d'Applications des Machines Motrices**
**224, Quai de Stalingrad**
**F-92130 Issy-les-Moulineaux (FR)**

(72) Inventeur : **Joseph, Philippe**
**Quartier le Degay Loriol du Comtat**
**F-84200 Carpentras (FR)**

(74) Mandataire : **Moncheny, Michel et al**
**c/o Cabinet Lavoix 2 Place d'Estienne d'Orves**
**F-75441 Paris Cedex 09 (FR)**

**Description**

La présente invention a pour objet un élément de suspension hydropneumatique d'un véhicule lourd, ou du train d'atterrissage d'un aéronef.

Plus particulièrement, l'invention est relative à un élément de suspension du type comprenant un corps tubulaire solidaire d'une roue, monté coulissant sur une tige articulée sur le châssis du véhicule, le corps tubulaire contenant une chambre de gaz et une chambre de liquide hydraulique séparée en deux compartiments par une bague centrale fixée à la tige.

Dans les éléments de suspension de ce genre, la chambre de gaz est habituellement séparée de la chambre de liquide hydraulique par un piston mobile ou par une membrane souple. On constate qu'en partique, l'étanchéité ainsi réalisée entre l'huile et le gaz n'est pas toujours satisfaisante. De plus, cette membrane ou ce piston n'assure qu'une isolation thermique insuffisante entre le gaz et le liquide hydraulique. Il en résulte que le laminage du liquide hydraulique provoqué par les oscillations du corps tubulaire sur la tige lorsque le véhicule est en mouvement, notamment sur terrains accidentés (par « laminage » on entend les va-et-vient répétés de l'huile par des rétrécissements de passage d'un compartiment à l'autre de la chambre hydraulique durant les oscillations), provoque un échauffement de l'huile qui se transmet au gaz à travers la membrane souple ou le piston. De ce fait, le volume du gaz augmente et modifie de manière indésirable la garde au sol du véhicule.

Ainsi, le document EP-A 045 269 décrit un élément de suspension hydropneumatique équipé d'un dispositif de laminage pour refroidir le fluide. Mais le circuit hydraulique incluant ce dispositif de laminage est du type ouvert, c'est-à-dire que l'huile qui sort de l'un ou l'autre des compartiments et traverse le bloc de laminage repasse par le carter faisant office de réservoir.

Il en résulte de longues canalisations qui entraînent des pertes de charge, d'où une mauvaise aspiration et un mauvais fonctionnement de la suspension, qui font que ce système n'est pas industriellement exploité.

L'invention a pour but de remédier à ces inconvénients.

Conformément à l'invention, l'élément de suspension est caractérisé en ce qu'il est pourvu d'un dispositif de laminage du liquide hydraulique, agencé extérieurement au corps tubulaire et interposé entre les deux compartiments précités.

Ainsi, les va-et-vient du liquide hydraulique se font en partie à l'extérieur du corps tubulaire, ce qui permet d'évacuer à l'extérieur de l'élément de suspension la plus grande partie de la chaleur emmagasinée par le liquide, donc sans provoquer d'échauffement sensible au gaz.

Suivant un mode de réalisation de l'invention, le dispositif de laminage comprend un corps fixé latéralement au corps tubulaire, dans lequel sont ménagées deux chambres communiquant entre elles ainsi qu'avec deux conduits de circulation de liquide hydraulique agencés dans le corps tubulaire, et qui débouchent dans les extrémités opposées de la chambre de liquide hydraulique, les chambres précitées contenant chacune un moyen anti-retour dont l'un assure l'amortissement de la compression et l'autre l'amortissement de la détente.

Ainsi la chaleur emmagasinée par le laminage de l'huile est transmise pour la plus grande partie à ce dispositif, d'où elle est dissipée dans l'atmosphère extérieure.

Suivant une autre caractéristique importante de l'invention, la chambre de gaz et la chambre de liquide hydraulique sont séparées par un épaulement annulaire intérieur du corps tubulaire formant palier, et par lequel le corps tubulaire est en appui coulissant sur la tige, cet épaulement étant pourvu de moyens assurant l'étanchéité entre les chambres de gaz et de liquide hydraulique.

Un tel palier, réalisé avec une longueur suffisante, assure une étanchéité pratiquement absolue entre l'huile et le gaz.

Les particularités et avantages de l'invention apparaitront au cours de la description qui va suivre, faite en référence aux dessins annexés qui en illustrent un mode de réalisation à titre d'exemple non limitatif :

La Figure 1 est une vue en perspective schématique de l'élément de suspension visé par l'invention et de ses articulations sur le châssis du véhicule ;

les Figures 1A et 1B sont deux demi-vues complémentaires en coupe axiale longitudinale d'une forme de réalisation de l'élément de suspension hydropneumatique pour véhicule lourd visé par l'invention, ces demi-vues étant raccordées suivant la ligne A-B ;

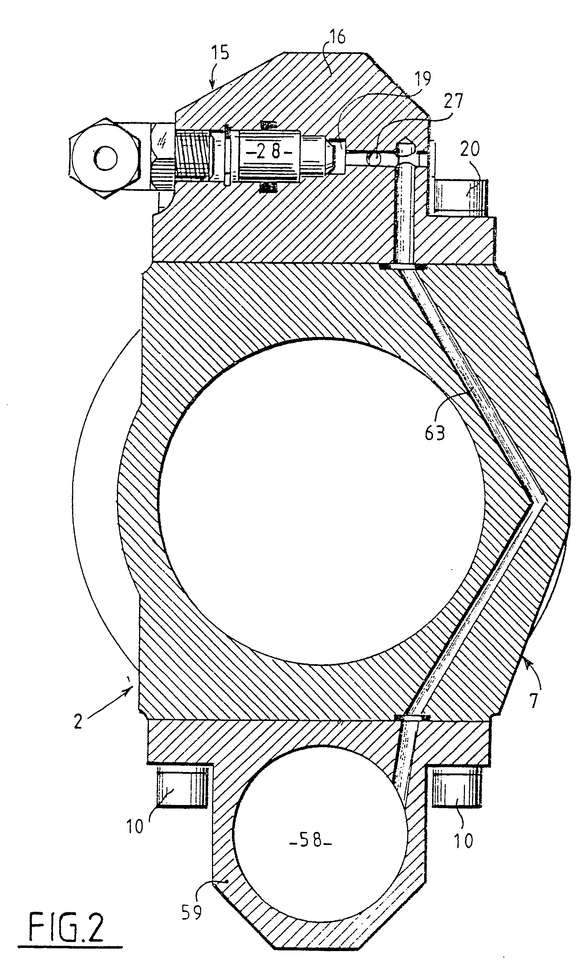

la Figure 2 est une vue en coupe transversale suivant II-II de la Figure 1 ;

la figure 3 est une vue en coupe longitudinale du dispositif de laminage équipant l'élément selon l'invention, suivant III-III de la Figure 1 ;

la Figure 4 est une vue en coupe longitudinale d'un dispositif de dilatation du liquide hydraulique suivant IV-IV de la Figure 1, ce dispositif étant fixé latéralement au corps tubulaire.

L'élément de suspension hydropneumatique représenté aux dessins est destiné à équiper une roue 1 d'un véhicule lourd, ou du train d'atterrissage d'un aéronef, à chaque roue 1 étant associé un tel élément, dont l'axe longitudinal X-X est normalement vertical.

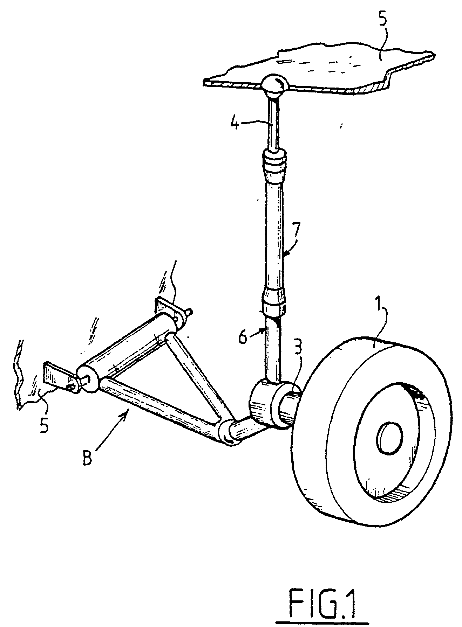

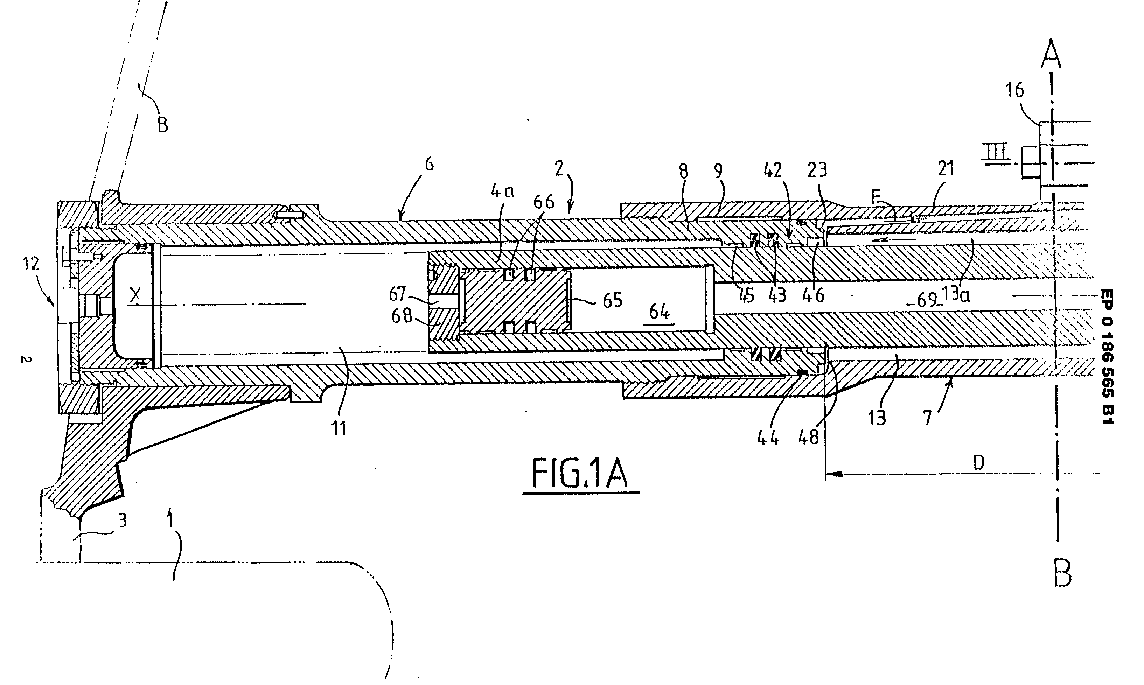

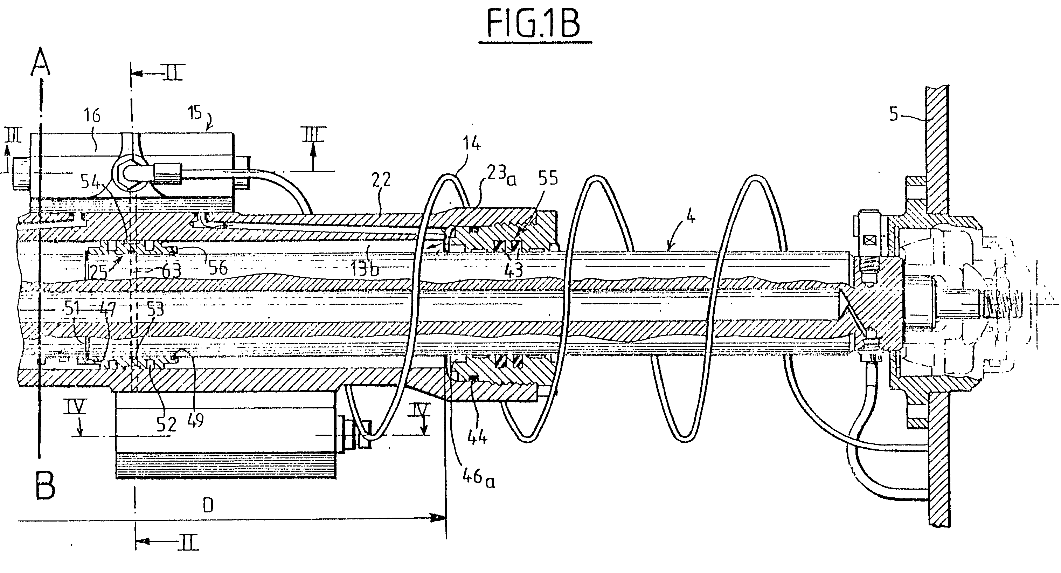

Cet élément comprend un corps tubulaire 2 solidaire de l'essieu 3 de la roue 1, monté coulissant sur une tige 4 articulée sur le châssis 5 du véhicule, de manière connue en soi. De plus, le corps 2 est articulé sur un bras de suspension B (Figure 1) lié au châssis 5 du véhicule de manière connue.

Ce corps tubulaire 2 est formé de deux parties coaxiales entre elles et avec le bras 4, donc d'axe commun X-X : une première partie tubulaire 6 dont l'extrémité inférieure est fixée à l'essieu 3, et une seconde partie tubulaire 7 pourvue à son extrémité inférieure d'un renflement cylindrique 9 dans lequel vient s'emboîter l'extrémité 8 de la première partie 6, l'extrémité 8 étant fixée au renflement 9 par tout moyen approprié tel que par exemple vissage. La partie inférieure 6 du corps tubulaire 2 contient une chambre de gaz comprimé 11, par exemple de l'azote, pouvant être introduit par un chapeau terminal 12 de manière connue en soi, tandis que la seconde partie tubulaire 7 renferme une chambre 13 de liquide hydraulique, de préférence de l'huile. La chambre 13 est délimitée par la paroi intérieure de la partie tubulaire 7 et par la périphérie de la tige 4, et est donc annulaire, l'huile pouvant être introduite dans la chambre 13 par une tubulure 14 d'alimentation.

Suivant l'invention, l'élément de suspension est pourvu d'un dispositif de laminage 15 du liquide hydraulique (que l'on supposera être de l'huile dans la suite de la description), agencé extérieurement au corps tubulaire 2.

Le dispositif de laminage 15 comprend un corps 16 fixé latéralement par des vis 20 à la partie tubulaire 7 du corps 2, et dans ce corps 16 sont ménagées deux chambres 17, 18 communiquant entre elles par un passage central 19 ainsi qu'avec deux conduits 21, 22 de circulation de l'huile, agencés dans la partie 7 du corps 2. Les conduits 21, 22 débouchent sur des butées annulaires opposées 23, 23a de la chambre 13, laquelle est divisée en deux compartiments 13a, 13b par une bague centrale 25 fixée à la tige 4, et sur laquelle la partie tubulaire 7 peut coulisser de manière étanche.

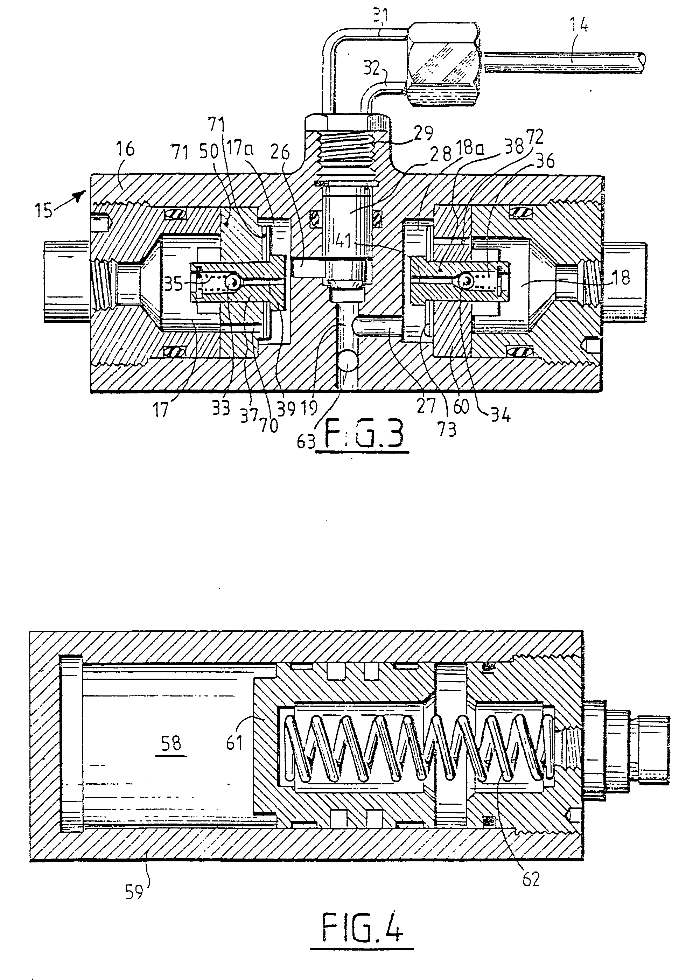

Les conduits 21, 22 de laminage de l'huile débouchent donc respectivement dans les chambres 17 et 18 du dispositif de laminage 15 par des perçages du corps 16 (non visibles dans le plan de la Figure 3), ces chambres étant reliées au passage central 19 par des alésages 26, 27. Le passage central 19 peut être fermé par un clapet 28 monté coulissant dans un alésage transversal 29 dans lequel débouchent deux tubulures 31, 32 qui communiquent avec la tubulure 14. Cette dernière constitue avec le clapet 28 un circuit permettant le blocage de toute circulation d'huile dans la chambre 13 lorsqu'on commande de manière connue en soi, la fermeture du passage 19 par le clapet 28, l'élément de suspension étant ainsi lui-même bloqué dans une position prédéterminée.

Chaque chambre 17, 18 du dispositif de laminage 15 est munie d'un moyen anti-retour, à savoir dans l'exemple décrit une bille respective 33, 34 sollicitée par un ressort 35, 36 sur un siège formé dans une pièce 37, 38 fixée dans la chambre 17, 18 et percée d'un canal 39, 41. Ce dernier débouche dans un compartiment 17a, 18a qui communique lui-même avec l'ouverture 26, 27 et le passage central 19.

Les pièces 37, 38 traversent des supports 50, 60 fixés dans le corps 16 et qui délimitent respectivement, d'une part la chambre 17 et le compartiment 17a, et d'autre part la chambre 18 et le compartiment 18a. Les supports 50, 60 sont respectivement traversés par plusieurs perçages 70, 72 (dont un seul pour chaque support est visible dans le plan de la Figure 31, qui font communiquer les chambres 17, 18, et les compartiments 17a, 18a. Les perçages 70 du support 50 sont normalement obturés par des clapets déformables 71 correspondants, solidarisés avec le support 50 et disposés autour de la pièce 37, ces clapets 71 pouvant se soulever lorsque la pression d'huile dans les perçages 70 est suffisante. De même, des clapets déformables 73 similaires aux clapets 71 sont fixés sur la face du support 60 délimitant le compartiment 18a, et obturent normalement les perçages 72. Ces clapets 73 peuvent se soulever et laisser passer l'huile des perçages 72 dans le compartiment 18a, lorsque la pression d'huile dans les perçages 72 est suffisante.

Ainsi, les conduits 21, 22 débouchant respectivement dans les chambres 17, 18, une circulation d'huile dans le conduit 21 vers le dispositif de laminage 15 (suivant la flèche F sur la Figure 1A), traverse la chambre 17, les perçages 70, soulève les clapets déformables 71, traverse le compartiment 17a, l'ouverture 26, le passage 19, l'ouverture 27 et le compartiment 18a, décolle la bille 34 de son siège, passe dans la chambre 18 et de là dans le conduit 22, puis dans le compartiment 13b de la chambre hydraulique 13. Inversement, l'huile chassée par le conduit 22 entre dans le compartiment 18, traverse les perçages 72, soulève les clapets déformables 73, traverse le compartiment 18a, l'ouverture 27, le passage 19, l'ouverture 26 et le compartiment 17a, puis décolle la bille 33 de son siège et traverse la chambre 17 pour s'écouler dans le compartiment 13a par le conduit 21.

La chambre 17 et le clapet 33, 35 assurent l'amortissement de la compression de l'huile, tandis que la chambre 18 et le clapet anti-retour 34, 36 assurent l'amortissement de la détente, durant les oscillations successives de l'élément de suspension.

Suivant une particularité de l'invention, la chambre 11 de gaz comprimé et la chambre 13 d'huile sont séparées par un palier annulaire 42 du corps tubulaire 2, et par lequel le corps 2 est en appui coulissant sur la tige 4, cet épaulement ou palier 42 étant pourvu de moyens assurant l'étanchéité entre les chambres 11 et 13. Dans l'exemple décrit, le palier 42 constitue l'extrémité de la partie tubulaire 6 emboîtée dans la partie terminale 9 de la partie tubulaire 7, et les moyens d'étanchéité entre les chambres 11 et 13 comprennent deux joints dynamiques internes 43, logés dans des gorges du palier 42 et qui sont en contact coulissant étanche avec la surface du bras 4. Un joint statiqué extérieur 44 logé dans une gorge correspondante tournée vers l'extérieur assure l'étanchéité entre la chambre 13 et la paroi intérieure de la partie terminale 9. Enfin, deux bagues porteuses 45 sont logées dans le palier 42 de part et d'autre des joints dynamiques 43, et en contact coulissant avec la tige 4, et un évidement annulaire 46 est agencé à l'extrémité du palier 42 contiguë à la chambre 13.

Cet évidement 46 constitue une butée haute susceptible de recevoir en fin de course un épaulement conjugué 47 formé sur la bague 25. De plus, cet intervalle annulaire assure un amortissement de la fin de la course du corps tubulaire 2 sur la tige 4, par laminage de l'huile lorsque l'épaulement 47 vient s'engager dans l'évidement 46.

La bague 25 est fixée à la tige 4 par un jonc 49 du côté du compartiment 13b, et par un circlips 51 du côté du compartiment 13a. Deux joints dynamiques 52 montés dans la bague 25 assurent l'étanchéité entre celle-ci et la partie tubulaire 7, et un joint statique 53 garantit l'étanchéité entre la tige 4 et la bague 25, une bague porteuse 54 étant enfin disposée entre les joints 52.

L'extrémité de la partie tubulaire 7 la plus proche de l'articulation de la tige 4 sur le châssis 5 est munie d'un palier 55 similaire au palier 42, fixé par tout moyen approprié tel que vissage ou soudure à la partie terminale du corps 7, et en appui coulissant étanche sur le bras 4. Les deux paliers étanches 42, 55 étant donc solidaires de la partie tubulaire 7 du corps 2, sont ainsi séparés par un intervalle constant D, quelles que soient les positions respectives de la tige 4 et du corps tubulaire 2.

Le palier 55 présente notamment à son extrémité délimitant le compartiment 13b de la chambre 13, un évidement 46a identique à l'évidement 46 du palier 42, et constituant une butée basse susceptible de recevoir un épaulement saillant correspondant 56 de la bague 25 en fin de course du corps 2. L'épaulement 56 en pénétrant dans l'évidement 46a lamine l'huile contenue dans cet évidement et expulsée lors de la pénétration de l'épaulement 56, ce qui a pour effet de freiner énergiquement le corps 2 qui vient alors en butée à vitesse nulle, cet agencement étant similaire à celui de la butée 23 et de l'évidement 46.

Le dispositif de laminage 15 est relié à une chambre de dilatation 58 formée dans un corps cylindrique 59 fixé extérieurement à la partie tubulaire 7 par des vis 10 et permettant la dilatation de l'huile en cas d'échauffement important. A cet effet, la chambre 58 contient un piston coulissant 61, fixé à une extrémité d'un ressort intérieur coaxial 62 dont l'autre extrémité est solidaire du fond du cylindre 59. La chambre 58 communique avec le passage central 19 du dispositif de laminage 15 par un conduit transversal 63 contournant la partie tubulaire 7. En cas d'échauffement important de l'huile, celle-ci se dilate dans la chambre 58 et repousse le piston 61 contre la sollicitation antagoniste du ressort de rappel 62.

L'invention prévoit également de ménager une chambre 64 dans la partie terminale 4a de la tige 4 logée dans la chambre de gaz 11. Cette chambre 64, d'axe X-X, contient un piston 65 pouvant y coulisser de manière étanche grâce à des joints dynamiques 66, et communique, d'un côté du piston 65 avec la chambre de gaz 11 par un alésage 67 formé dans un fond 68 fixé à l'extrémité 4a, et de l'autre côté du piston 65 avec une canalisation 69, d'axe X-X et assurant l'alimentation de la chambre 64 en liquide hydraulique de commande du piston 65. A l'extrémité opposée de la tige 4, la canalisation 69 débouche dans une tubulure d'un circuit d'huile non représenté.

La position du piston 65, déterminée par la quantité d'huile dans la canalisation 69 et la chambre 64, permet de régler la pression du gaz dans la chmabre 11 et par conséquent la garde au sol du véhicule ou du train d'atterrissage.

Durant les oscillations de l'élément de suspension qui vient d'être décrit, lorsque le véhicule roule sur un terrain plus ou moins accidenté, le corps tubulaire 2 coulisse sur la tige 4, les limites haute et basse de ces oscillations étant déterminées respectivement par l'emboîtement de l'épaulement 47 dans l'évidement correspondant 46 et par l'emboîtement de l'épaulement saillant 56 dans l'évidement 46a du palier 55. Pendant ces oscillations, l'huile des compartiments 13a, 13b est alternativement chassée dans le dispositif de laminage 15 par l'extérieur de l'évidement 46, le conduit 21, la chambre 17, le compartiment 17a, le passage central et la chambre 18 avec ouverture du clapet anti-retour 34, 36 durant la course de compression, et inversement durant la course de détente par l'extérieur de l'évidement 46a du palier 55, le conduit 22, la chambre 18, les perçages 72, le compartiment 18a, le passage central 19, la chambre 17 avec ouverture du clapet 33, 35 et enfin retour dans le compartiment 13a par le conduit 21. En fin de course, les intervalles assurent l'amortissement sur les butées 23, 23a et l'huile échauffée par ce laminage dissipe la plus grande partie de sa chaleur pendant son passage dans le dispositif de laminage 15. Ainsi la chaleur emmagasinée par l'huile n'est pas transmise au gaz de la chambre 11, et la garde au sol du véhicule n'est pas déréglée intempestivement.

D'autre part, comme déjà indiqué, la séparation des chambres 11 et 13 par le palier 42 assure une étanchéité quasi-absolue entre l'huile et le gaz, et donc une meilleure isolation thermique entre ces deux fluides.

Le fait de prévoir deux paliers 43, 55 avec entre eux une distance constante, présente un avantage importante, car cette distance constante assure une résistance constante de l'élément de suspension à la torsion provoquée par les déplacements de la roue 1. En effet, une telle résistance constante à la torsion ne serait pas obtenue si le deuxième palier était fixé à un piston mobile, comme cela est le cas dans certaines réalisations connues. On obtient donc ainsi une meilleure résistance mécanique de l'élément de suspension.

Enfin, l'agencement du piston coulissant 65 dans la chambre 64 et de la tige 4 permet de faire varier la pression du gaz dans la chambre 11, donc la garde au sol du véhicule.

L'invention n'est pas limitée au mode de réalisation décrit et peut comporter de nombreuses variantes d'exécution. Le dispositif de laminage 15 notamment peut être remplacé par tout autre dispositif équivalent à celui représenté aux dessins, assurant le refroidissement de l'huile à l'extérieur du corps 2, et les paliers 42, 55 peuvent éventuellement ne comporter qu'un seul joint dynamique 43.

## Revendications

1. Elément de suspension hydropneumatique d'un véhicule lourd notamment blindé, ou du train d'atterrissage d'un aéronef, comprenant un corps tubulaire (2) solidaire du moyeu (3) d'une roue (1), articulé au bas du châssis (5) par un bras (B) et monté coulissant sur une tige (4) articulée sur le châssis (5) du véhicule, le corps tubulaire (2) contenant une chambre de gaz (11) et une chambre de liquide hydraulique (13) séparée en deux compartiments (13a, 13b) par une bague centrale (25) fixée à la tige (4), caractérisé en ce qu'il est pourvu d'un dispositif de laminage (15) du liquide hydraulique, agencé extérieurement au corps tubulaire (2) et interposé entre les deux compartiments précités.

2. Elément de suspension selon la revendication 1, caractérisé en ce que le dispositif de laminage (15) comprend un corps (16) fixé latéralement au corps tubulaire (2), dans lequel sont ménagées deux chambres (17, 18) communiquant entre elles ainsi qu'avec deux conduits (21, 22) de circulation de liquide hydraulique agencés dans le corps tubulaire (2), et qui débouchent dans les extrémités opposées de la chambre de liquide hydraulique (13), les chambres précitées (17, 18) contenant chacun un moyen anti-retour (33, 34) dont l'un assure l'amortissement de la compression et l'autre l'amortissement de la détente.

3. Elément de suspension selon la revendication 2, caractérisé en ce que les deux chambres (17, 18) du dispositif de laminage (15) sont reliées par un passage (19) susceptible d'être obturé par un clapet de fermeture (28) pouvant être commandé par un circuit (14) de blocage de la suspension.

4. Elément de suspension selon l'une des revendications 1 à 3, caractérisé en ce que la chambre de gaz (11) et la chambre de liquide hydraulique (13) sont séparées par un épaulement annulaire intérieur (42) du corps tubulaire (2) formant palier, et par lequel le corps tubulaire (2) est en appui coulissant sur la tige (4), cet épaulement (42) étant pourvu de moyens assurant l'étanchéité entre les chambres de gaz (11) et de liquide hydraulique (13).

5. Elément de suspension selon la revendication 4, caractérisé en ce que l'épaulement ou palier (42) constitue l'extrémité d'une première partie tubulaire (6) emboîtée dans une seconde partie tubulaire (7) qui constitue avec la première partie (6) le corps tubulaire (2), et lesdits moyens d'étanchéité comprennent au moins un joint dynamique interne (43) en contact coulissant avec la tige (4), et au moins un joint externe statique (44) assurant l'étanchéité entre les deux parties (6, 7) du corps tubulaire (2).

6. Elément de suspension selon l'une des revendications 4 et 5, caractérisé en ce que l'extrémité du corps tubulaire (2) la plus proche de l'articulation de la tige (4) sur le châssis (5) est munie d'un palier (55) en contact coulissant et étanche avec la tige (4), ces deux paliers étanches (42, 55) étant solidaires du corps tubulaire (2) et ainsi séparés par un intervalle constant (D) quelles que soient les positions respectives de la tige (4) et du corps tubulaire (2).

7. Elément de suspension selon la revendication 6, caractérisé en ce que les deux paliers (42, 55) du corps tubulaire (2) sont munis de butées haute et basse (23) respectivement et de moyens d'amortissement en fin de course du corps tubulaire (2), adaptés pour recevoir des épaulements conjugués (47, 56) formés sur les côtés opposés de la bague centrale (25) fixée à la tige (4).

8. Elément de suspension selon l'une des revendications 1 à 7, caractérisé en ce qu'une chambre (54) contenant un piston (65) coulissant de manière étanche est formée dans la tige (4) et communique, d'un côté du piston (65) avec la chambre de gaz (11) et de l'autre côté du piston (65) avec une canalisation (69) d'alimentation en liquide hydraulique de commande du piston (65) ménagée axialement dans la tige (4), la position du piston (65) permettant de régler la pression du gaz et donc la garde au sol du véhicule ou du train d'atterrissage.

9. Elément de suspension selon l'une des revendications 1 à 8, caractérisé enc ce que le dispositif de laminage (15) est relié à une chambre (58) de dilatation du liquide hydraulique fixée au corps tubulaire (2) contenant un piston (61) sollicité par un organe élastique (62), et permettant la dilatation du liquide en cas d'échauffement important.

## Claims

1. Hydropneumatic suspension element for a heavy, and in particular armoured, vehicle or the landing set of wheels of an aircraft, said element comprising a tubular body (2) connected to be the hub (3) of a wheel (1), pivotally connected to be bottom of the chassis (5) by an arm (B) an slidably mounted on a rod (4) which is pivotally connected to the chassis (5) of the vehicle, the tubular body (2) containing a gas chamber (11) and a hydraulic liquid chamber (13) divided into two compartments (13a, 13b) by a central ring (25), fixed to said rod (4), characterized in that there is provided a device (15) disposed outside said tubular body (2) for drawing the hydraulic liquid and interposed between the two aforementioned compartments.

2. Suspension element according to claim 1, characterized in that the drawing device (15) comprises a body (16) fixed laterally to said tubular body (2) in which are provided two chambers (17, 18) communicating with each other and with two hydraulic liquid circulation conduits (21, 22) arranged in said tubular body (2) and opening into the opposed ends of the hydraulic liquid chamber (13), said chambers (17, 18) each containing a check-means (33, 34), one of which check-means ensures the damping of the compression while the other ensures the damping of the expansion.

3. Suspension element according to claim 2, characterized in that the two chambers (17, 18) of the drawing device (15) are inter-connected through a passageway (19) capable of being closed by a closing valve member (28) which may be controlled by a circuit (14) for blocking the suspension.

4. Suspension element according to any one of the claims 1 to 3, characterized in that the gas chamber (11) and the hydraulic liquid chamber (13) are separated by an annular shoulder (42) inside said tubular body (2) and constituting a bearing and by which tubular body (2) slidingly bears against the rod (4), said shoulder (42) being provided with means for providing fluidtightness between the gaz chamber (11) and the hydraulic liquid chamber (13).

5. Suspension element according to claim 4, characterized in that the shoulder or the bearing (42) constitutes the end of a first tubular part (6) fitted into a second tubular part (7) forming with the first tubular part (6) said tubular body 92), said means providing fluidtightness comprise at least one internal dynamic sealing element (43) in sliding contact with the rod (4), and at least one external static sealing element (44) providing fluidtighness between said two parts (6, 7) of said tubular body (2).

6. Suspension element according to either of the claims 4 and 5, characterized in that the end of said tubular body (2) which is the closer to said pivotal connection of the rod (4) to the chassis (5) is provided with a second bearing (55) in sliding and fluidtight contact with the rod (4), said two tight bearings (42, 55) being integral with tubular body (2) and thus separated by a constant gap (D) irrespective of the respective positions of the rod (4) and said tubular body (2).

7. Suspension element according to claim 6, characterized in that the two bearings (42, 55) of said tubular body (2) are provided with respectively upper and lower abutments (23) and damping means for the end of the travel of said tubular body (2), adapted to receive conjugate shoulders (47, 56) formed on opposite ends of said central ring (25) fixed to the rod (4).

8. Suspension element according to any one of the claims 1 to 7, characterized in that a chamber (54) containing a piston (65) slidably mounted in a fluidtight manner therein, is formed in the rod (4) and communicates, at one end of said piston (65), with the gas chamber (11) and, at the other end of said piston (65) with a hydraulic liquid supply conduit (69) controlling the piston (65) provided axially in the rod (4), the position of the piston (65) enabling the pressure of the gas, and consequently the ground clearance of the vehicle or the landing set of wheels, to be adjusted.

9. Suspension element according to any one of the claims 1 to 8, characterized in that the drawing device (15) is connected to an expansion chamber (58) of the hydraulic liquid fixed to said tubular body (2) containing a piston (61) biased by elastically yieldable means (62) and allowing the expansion of the liquid in the event of great heating.

**Patentansprüche**

1. Hydropneumatisches Aufhängungsbauteil für ein Schwerfahrzeug, insbesondere ein Panzerfahrzeug, oder ein Flugzeugfahrgestell mit einem rohrförmigen Körper (2), der an der Nabe (3) eines Rades (1) befestigt ist, am Unterteil des Rahmens (5) über einen Arm (8) angelenkt ist und gleitend verschiebbar auf einem Schaft (4) angeordnet ist, der am Fahrzeugrahmen (5) angelenkt ist, wobei der rohrförmige Körper (2) eine Gaskammer (11) und eine Kammer (13) für eine hydraulische Flüssigkeit enthält, die in zwei Abteile (13a, 13b) durch einen zentralen Ring (25) unterteilt ist, der am Schaft (4) befestigt ist, dadurch gekennzeichnet, daß eine Drosseleinrichtung (15) für die hydraulische Flüssigkeit vorgesehen ist, die außen am rohrförmigen Körper (2) angeordnet ist und zwischen den beiden genannten Abteilen liegt.

2. Aufhängungsbauteil nach Anspruch 1, dadurch gekennzeichnet, daß die Drosseleinrichtung (15) einen Körper (16) umfaßt, der seitlich am rohrförmigen Körper (2) befestigt ist und in dem zwei Kammern (17, 18) vorgesehen sind, die miteinander und mit zwei Zirkulationsleitungen (21, 22) für die hydraulische Flüssigkeit verbunden sind, die im rohrförmigen Körper (2) vorgesehen sind und die in den gegenüberliegenden Enden der Kammer (13) für die hydraulische Flüssigkeit münden, wobei die genannten Kammern (17, 18) jeweils Rückschlageinrichtungen (33, 34) enthalten, von denen eine für eine Dämpfung der Kompression und die andere für eine Dämpfung der Druckabnahme sorgt.

3. Aufhängungsbauteil nach Anspruch 2, dadurch gekennzeichnet, daß die beiden Kammern (17, 18) der Drosseleinrichtung (15) über einen Kanal (19) miteinander verbunden sind, der durch eine Schließklappe (28) geschlossen werden kann, die über eine Schaltung (14) zum Blockieren der Aufhängung angesteuert werden kann.

4. Aufhängungsbauteil nach einem der Ansprüche 1 bis 3, dadurch gekennzeichnet, daß die Gaskammer (11) und die Kammer (13) für die hydraulische Flüssigkeit durch eine innere Ringschulter (42) des rohrförmigen Körpers (2) getrennt sind, die einen Absatz bildet, an dem der rohrförmige Körper (2) gleitend verschiebbar auf dem Schaft (4) gelagert ist, wobei die Schulter (42) mit Einrichtungen versehen ist, die einen dichten Abschluß zwischen der Gaskammer (11) und der Kammer (13) für die hydraulische Flüssigkeit liefern.

5. Aufhängungsbauteil nach Anspruch 4, dadurch gekennzeichnet, daß die Schulter oder der Absatz (42) das Ende eines ersten rohrförmigen Teiles (6) bildet, das in einem zweiten rohrförmigen Teil (7) sitzt, das mit dem ersten Teil (6) den rohrförmigen Körper (2) bildet, und daß die Einrichtungen, die einen dichten Abschluß liefern, wenigstens eine dynamische interne Dichtung (43) in Gleitkontakt mit dem Schaft (4) und wenigstens eine externe statische Dichtung (44) umfassen, die für einen dichten Abschluß zwischen den beiden Teilen (6, 7) des rohrförmigen Körpers (2) sorgt.

6. Aufhängungsbauteil nach einem der Ansprüche 4 und 5, dadurch gekennzeichnet, daß das Ende des rohrförmigen Körpers (2), das dem Anlenkpunkt des Schaftes (4) am Rahmen (5) näher liegt, mit einem Absatz (55) in einem dichten Gleitkontakt mit dem Schaft (4) versehen ist, wobei die beiden dichten Absätze (42, 55) am rohrförmigen Körper (2) fest angebracht sind und über einen konstanten Abstand (D) getrennt sind, je nachdem, wie die jeweilige Lage des Schaftes (4) und des rohrförmigen Körpers (2) ist.

7. Aufhängungsbauteil nach Anspruch 6, dadurch gekennzeichnet, daß die beiden Absätze (52, 55) des rohrförmigen Körpers (2) mit einem oberen und einem unteren Gegenlager (23) jeweils und mit Dämpfungseinrichtungen am Ende des Weges des rohrförmigen Körpers (2) versehen sind, die so ausgebildet sind, daß sie zugeordnete Anschläge (47, 56) aufnehmen können, die auf den gegenüberliegenden Seiten des zentralen Ringes (25) ausgebildet sind, der am Schaft (4) befestigt ist.

8. Aufhängungsbauteil nach einem der Ansprüche 1 bis 7, dadurch gekennzeichnet, daß eine Kammer (54), die gleitend verschiebbar und dicht einen Kolben (65) enthält, im Schaft (4) ausgebildet und an einer Seite des Kolbens (65) mit der Gaskammer (11) und an der anderen Seite des Kolbens (65) mit einem Kanal (69) zum Versorgen des Kolbens (65) mit einem hydraulischen Steuerfluid verbunden ist, der axial im Schaft (4) angeordnet ist, wobei die Lage des Kolbens (65) eine Steuerung des Gasdruckes und somit der Bodenfreiheit des Fahrzeuges oder des Fahrgestelles erlaubt.

9. Aufhängungsbauteil nach einem der Ansprüche 1 bis 8, dadurch gekennzeichnet, daß die Drosseleinrichtung (15) mit einer Ausdehnungskammer (58) für das hydraulische Fluid verbunden ist, die am rohrförmigen Körper (2) befestigt ist und einen Kolben (61) enthält, der über ein elastisches Element (62) beaufschlaft ist und eine Ausdehnung der Flüssigkeit bei einer erheblichen Erwärmung erlaubt.

FIG.1

FIG.1A

EP 0 186 565 B1

FIG.1B

FIG.2

FIG.3

FIG.4